# EUROPÄISCHE PATENTSCHRIFT

(11) **EP 2 233 768 B1**
(45) Veröffentlichungstag und Bekanntmachung des Hinweises auf die Patenterteilung: **04.09.2013**
(21) Anmeldenummer: 10002349.8
(22) Anmeldetag: 08.03.2010
(51) Int. Cl.: F16D 71/00, F16D 49/00, B23Q 16/10

(54) **Klemmvorrichtung**
Clamping device
Dispositif de serrage

(30) Priorität: 24.03.2009 DE 102009014117
(43) Veröffentlichungstag der Anmeldung: 29.09.2010
(73) Patentinhaber: Peiseler GmbH & Co.KG, 42855 Remscheid (DE)
(72) Erfinder: Korischem, Benedict, Dr., 40489 Düsseldorf (DE); Hölter, Hans, 42399 Wuppertal (DE)
(74) Vertreter: Gesthuysen Patent- und Rechtsanwälte

(56) Entgegenhaltungen:
- WO-A1-96/23982
- DE-A1- 10 335 795
- DE-B4- 10 332 424
- US-A- 3 663 027
- US-A1- 2006 042 892

## Beschreibung

Die Erfindung betrifft eine Klemmvorrichtung mit einem Gehäuse, mit einer im Gehäuse drehbar gelagerten Spindel und mit einem elastischen Klemmelement, wobei das Klemmelement durch Beaufschlagung mit einer Kraft aus einer ersten Position, in der die Spindel drehbar ist, in eine zweite Position, in der die Spindel durch das Klemmelement geklemmt ist, verbringbar ist. Daneben betrifft die Erfindung auch ein elastisches Klemmelement zur Verwendung bei einer Klemmvorrichtung, die ein Gehäuse und eine im Gehäuse drehbar gelagerte Spindel aufweist.

Klemmvorrichtungen werden insbesondere bei Rundschalttischen oder Teilgeräten eingesetzt, mit denen ein aufgespanntes Werkstück in einer gewünschten Winkelstellung positioniert wird, um das Werkstück dann bearbeiten zu können. Das Werkstück kann dabei je nach Ausführung des Rundschalttisches bzw. Teilgeräts horizontal oder vertikal angeordnet werden. Damit sich die vorgegebene Position eines eingespannten Werkstücks bei dessen Bearbeitung mit einer entsprechenden Bearbeitungsmaschine, beispielsweise einer Fräs-, Bohr- oder Schleifmaschine nicht ungewollt verändert, muss von der Klemmvorrichtung eine ausreichend hohe Klemmkraft auf die Spindel aufgebracht werden.

Die Klemmung kann entweder formschlüssig, beispielsweise durch eine Planverzahnung, die eingekoppelt wird oder reibschlüssig durch das Andrücken einer Bremsscheibe an die drehbar gelagerte Spindel erfolgen. Die Ausgestaltung einer formschlüssigen Positionierung der Spindel bzw. eines Werkstücks hat dabei den Nachteil, dass die Anzahl der möglichen Teilschritte und somit die Anzahl der möglichen Positionen durch die Anzahl der Zähne der Planverzahnung vorgegeben ist, so dass unter Umständen eine bestimmte Position eines Werkstücks nicht realisierbar ist. Aus diesem Grunde wird insbesondere bei Teilgeräten, die eine hohe Positioniergenauigkeit aufweisen sollen, vorzugsweise eine reibschlüssige Klemmung der Spindel gegenüber dem feststehenden Gehäuse realisiert.

Aus der DE 103 32 424 B4 ist ein Rundschalttisch mit einer Klemmvorrichtung bekannt, bei dem die Klemmvorrichtung eine mit der Spindel verbundene Bremsscheibe, mehrere sich im Gehäuse abstützende Federelemente und einen hydraulisch oder pneumatisch betätigbaren, den Federelementen entgegenwirkenden Kolben aufweist. Im drucklosen Zustand des Kolbens erfolgt die Klemmung der Spindel dadurch, dass ein dünner Klemmkörper durch die Federelemente gegen die Bremsscheibe gedrückt wird. Wird der Kolben dagegen mit einem Druckmedium beaufschlagt, so wirkt der Kolben der Federkraft des Federelements entgegen, so dass der Klemmkörper nicht gegen die Bremsscheibe gedrückt wird und sich somit die Bremsscheibe ungehindert mit der Spindel mitdrehen kann.

Aus der gattungsbildenden DE 103 35 795 A1 ist eine eingangs beschriebene Klemmvorrichtung bekannt, bei der eine reibschlüssige Klemmung einer Welle gegenüber einem feststehenden Gehäuse erfolgt. Diese bekannte Klemmvorrichtung weist ein flaches, plattenförmiges Spannelement als Klemmelement auf, das einen im Ausgangszustand konvexen Biegebereich aufweist, wobei sich das äußere Ende des Spannelements im Gehäuse abstützt und das innere Ende des Spannelements eine Klemmkraft auf die zu klemmende Welle ausüben kann. Hierzu ist bei der bekannten Klemmvorrichtung im Gehäuse ein Druckraum ausgebildet, der auf einer Seite von dem konvexen Biegebereich des Spannelements begrenzt wird. Wird der Druckraum mit Überdruck beaufschlagt, so führt dies zu einer Verringerung der Krümmung des Biegebereichs des plattenförmigen Spannelements, wodurch das freie, innere Ende des Spannelements gegen die Welle gedrückt wird, so dass die Welle durch das Spannelement geklemmt wird.

Die bekannte Klemmvorrichtung weist den Nachteil auf, dass der Druckraum - funktionsnotwendiger Weise - nach innen zur rotierenden Spindel offen ist, was eine aufwendigere Abdichtung erforderlich macht. Damit die Krümmung des Biegebereichs des plattenförmigen Spannelements bei Druckbeaufschlagung verringert werden kann, ist es erforderlich, dass das Spannelement eine entsprechende geringe Dicke aufweist. Dies führt jedoch dazu, dass auch nur eine relativ geringe Reibfläche zur Klemmung der Spindel zur Verfügung steht, da bei der bekannten Klemmvorrichtung die Reibfläche durch die Dicke des Spannelements bestimmt wird.

Der vorliegenden Erfindung liegt daher die Aufgabe zugrunde, eine neue Klemmvorrichtung bzw. ein neues Klemmelement zur Verwendung bei einer Klemmvorrichtung zur Verfügung zu stellen, mit der bzw. mit dem bei möglichst einfacher konstruktiver Gestaltung hohe Klemmkräfte bzw. Haltemomente erzielt werden können.

Diese Aufgabe ist durch die Merkmale der Ansprüche 1 und 12 gelöst.

Die erfindungsgemäße Klemmvorrichtung unterscheidet sich zunächst dadurch von der aus der DE 103 35 795 A1 bekannten Klemmvorrichtung, dass das Klemmelement nicht von einem flachen, plattenförmigen Spannelement sondern von einem, einen Innenzylinder, einen Außenzylinder und eine die beiden Zylinder miteinander verbindende Membran aufweisenden, im wesentlichen topfförmigen Klemmelement gebildet wird. Dies hat zunächst den Vorteil, dass als Reibfläche zur Klemmung der drehbar gelagerten Spindel nicht die relativ dünne Stirnseite der Membran sondern ein breiter ausbildbarer Klemmabschnitt des Innenzylinders und/oder des Außenzylinders dient. Bei einer entsprechenden Dimensionierung der Breite der Membran, d. h. der radialen Erstreckung der Membran ergibt sich darüber hinaus eine Verstärkung der auf die Spindel wirkenden Klemmkraft relativ zur auf die Membran wirkenden Kraft entsprechend dem Hebelverhältnis zwischen dem Abstand des Kraftangriffspunktes an der Membran zum Innenzylinder bzw. zum Außenzylinder einerseits und dem Abstand zwischen der Reibfläche am Innenzylinder bzw. am Außenzylinder und der Membran andererseits.

Zur Befestigung des Klemmelements weisen der Innenzylinder und der Außenzylinder jeweils an ihrem der Membran abgewandten freien Ende einen Befestigungsbereich auf. Vorzugsweise ist dabei das Klemmelement zumindest über den Befestigungsbereich des Außenzylinders fest mit dem Gehäuse verbunden, insbesondere verschraubt. Alternativ dazu besteht jedoch auch die Möglichkeit, dass das Klemmelement über den Befestigungsbereich des Innenzylinders mit der drehbar gelagerten Spindel fest verbunden ist. Ist das Klemmelement mit der Spindel fest verbunden, so dass sich das Klemmelement mit der Spindel dreht, so erfolgt die reibschlüssige Klemmung zwischen dem Klemmabschnitt des Außenzylinders und dem Gehäuse.

Die Beaufschlagung der Membran des Klemmelements mit einer Kraft erfolgt mit Hilfe eines aktivierbaren Kraftelements, wobei im Rahmen der Erfindung das Kraftelement sowohl Druckluft oder Drucköl als auch ein insbesondere pneumatisch oder hydraulisch betätigbares Bauteil sein kann.

Gemäß einer bevorzugten Ausgestaltung der erfindungsgemäßen Klemmvorrichtung wirkt die Kraft auf die dem Befestigungsbereich des Innenzylinders und des Außenzylinders zugewandte Innenseite der Membran, d. h. das aktivierbare Kraftelement und das Klemmelement sind so zueinander angeordnet, dass das Kraftelement auf die dem Befestigungsbereich des Innenzylinders und des Außenzylinders zugewandte Innenseite der Membran wirkt. Ist das Kraftelement derart ausgestaltet, dass es pneumatisch oder hydraulisch betätigt wird, so kann durch die Beaufschlagung der Membran von der Innenseite auf einfache Art und Weise ein Druckraum gebildet werden, der durch das Klemmelement selber zur drehbar gelagerten Spindel geschlossen ist. Dadurch muss der Druckraum nicht gegenüber der drehenden Spindel abgedichtet werden, so dass einfache Dichtungselemente verwendet werden können, was die Ausgestaltung und Anordnung der Klemmvorrichtung beispielsweise in einem Teilgerät vereinfacht.

Wie zuvor bereits ausgeführt worden ist, kann die Membran direkt mit Druckluft oder Drucköl beaufschlagt werden, wobei bei Beaufschlagung der Innenseite der Membran, der Druckraum durch das Klemmelement selber zur drehbar gelagerten Spindel geschlossen ist.

Vorzugsweise erfolgt die Übertragung einer Kraft auf die Membran des Klemmelements jedoch dadurch, dass ein pneumatisch oder hydraulisch beaufschlagbarer Kolben vorgesehen ist, der so angeordnet und ausgebildet ist, dass der Kolben bei Druckbeaufschlagung insbesondere auf den mittleren Bereich bzw. den mittleren Durchmesser der Membran einwirkt. Besonders bevorzugt ist es dabei, wenn der Kolben mit Druckluft beaufschlagt wird. Die Verwendung eines pneumatischen Systems anstelle eines hydraulischen Systems hat den Vorteil, dass mit wesentlich niedrigerem Betriebsdruck gearbeitet werden kann, so dass auch die Zuleitungen wesentlich weniger störanfällig und damit weniger wartungsintensiv sind. Bei der erfindungsgemäßen Klemmvorrichtung hat sich dabei herausgestellt, dass bereits mit Betriebsdrücken von wenigen bar, beispielsweise von 6 bar, sehr hohe Klemmkräfte und Haltemomente gewährleistet werden können.

Grundsätzlich gibt es verschiedene Möglichkeiten, wie das Klemmelement und insbesondere die Membran ausgebildet sein können. Die Membran kann dabei - aus Richtung des Kraftelements gesehen - plan, konvex oder konkav ausgebildet sein, so dass durch Aktivierung des Kraftelements die Krümmung der Membran verändert, nämlich vergrößert oder verkleinert, werden kann.

Gemäß einer ersten Variante der Erfindung ist die Membran von ihrem Außenbereich und von ihrem Innenbereich zur Mitte hin nach außen geneigt bzw. gekrümmt, so dass die Membran - aus Richtung des Kraftelements betrachtet - im Wesentlichen konvex ausgebildet ist. Wird eine derart ausgebildete Membran in ihrem mittleren Bereich mit einer Kraft beaufschlagt, so führt dies zu einer Vergrößerung der Krümmung der Membran. Die Vergrößerung der Krümmung der Membran führt dabei dazu, dass sowohl der Klemmabschnitt des Innenzylinders als auch ein entsprechender Klemmabschnitt des Außenzylinders nach innen gezogen werden. Ist das Klemmelement so dimensioniert, dass im nicht aktivierten Zustand des Kraftelements, d. h. wenn die Membran nicht mit einer Kraft beaufschlagt ist, der Innenzylinder reibschlüssig an der Spindel und vorzugsweise zusätzlich der Außenzylinder reibschlüssig am Gehäuse oder an einer mit der Spindel fest verbundenen Bremsscheibe anliegt, so kann durch Aktivierung des Kraftelements, d. h. durch Beaufschlagung der Membran mit einer Kraft, die Klemmung der Spindel gelöst werden. Gemäß einer zweiten Variante der Erfindung ist das Klemmelement so ausgestaltet, dass die Membran von ihrem Außenbereich und von ihrem Innenbereich zur Mitte hin nach innen geneigt bzw. gekrümmt ist, so dass die Membran - aus Richtung des Kraftelements betrachtet - im Wesentlichen konkav ausgebildet ist. Gemäß einer bevorzugten Ausgestaltung eines derartigen Klemmelements beträgt der Membranneigungswinkel zwischen 90° und 110°, vorzugsweise zwischen 95° und 105°. Wird eine derartig ausgestaltetes Klemmelement auf der Innenseite der Membran mit einer Kraft beaufschlagt, so führt dies zu einer Verringerung der Krümmung der Membran, was dazu führt, dass sich der Abstand des Klemmabschnitts des Innenzylinders zur Spindel verringert. Ist bei einer derartigen Ausgestaltung der Membran das Klemmelement so dimensioniert, dass der Klemmbereich des Innenzylinders einen - zumindest geringen - Abstand zur Spindel aufweist, so ist die Spindel bei nicht aktiviertem Kraftelement gegenüber dem Klemmelement drehbar, während durch Aktivierung des Kraftelements, d. h. durch Beaufschlagung der Membran mit einer Kraft, die Spindel durch das Klemmelement geklemmt wird.

Gemäß einer alternativen Ausgestaltung der zweiten Variante des Klemmelements, bei dem die Membran nach innen geneigt ist, ist ein zweites, eine Kraft auf die Membran ausübendes Kraftelement vorgesehen, dessen Kraftrichtung der Kraftrichtung des aktivierten ersten Kraftelements entgegenwirkt. Dadurch ist eine Klemmvorrichtung realisierbar, bei der bei inaktiven ersten Kraftelement die Spindel - aufgrund der durch das zweite Kraftelement auf die Membran ausgeübten Kraft - durch das Klemmelement geklemmt ist, während bei Aktivierung des ersten Kraftelements die Klemmung gelöst ist. Das zweite Kraftelement kann dabei beispielsweise durch ein oder mehrere Federelemente realisiert sein. Weist das erste Kraftelement einen pneumatisch oder hydraulisch beaufschlagbaren Kolben auf, so erfolgt bei dieser Ausgestaltung somit eine Klemmung der Spindel im drucklosen Zustand des Kolbens, während zur Lösung der Klemmung der Spindel der Kolben mit Druck beaufschlagt werden muss. Grundsätzlich kann als erstes und/oder als zweites Kraftelement auch Druckluft oder Drucköl verwendet werden, so dass die Membran von beiden Seiten mit Druckluft oder Drucköl beaufschlagbar ist. Einleitend ist ausgeführt worden, dass eine Veränderung der Krümmung der Membran eine Veränderung des Abstandes des Klemmabschnitts des Innenzylinders und des Klemmabschnitts des Außenzylinders zur Spindel bewirkt. Ist das Klemmelement fest mit dem Gehäuse verbunden und liegt der Klemmabschnitt des Innenzylinders reibschlüssig an der Spindel an, so erfolgt eine radiale Klemmung am Innenzylinder des Klemmelements. Das Klemmelement ist nun so ausgebildet, dass in dieser zweiten - klemmenden - Position des Klemmelements auch der Außenzylinder mit einem Klemmabschnitt am Gehäuse anliegt, so dass am Außenzylinder zusätzlich eine radiale Klemmung zum Gehäuse erfolgt.

Gemäß einer besonders bevorzugten Ausgestaltung der erfindungsgemäßen Klemmvorrichtung liegt der Außenzylinder in der zweiten, die Spindel klemmenden Position des Klemmelements mit einem Klemmabschnitt nicht am Gehäuse sondern an einem entsprechenden Abschnitt einer mit der Spindel fest verbundenen Bremsscheibe an. Grundsätzlich ist es dabei möglich, dass das Klemmelement so dimensioniert ist, dass in der zweiten, klemmenden Position nur der Außenzylinder an der Bremsscheibe anliegt. Bevorzugt ist das Klemmelement jedoch so ausgebildet, dass sowohl der Innenzylinder mit seinem Klemmabschnitt an der Spindel als auch der Außenzylinder mit seinem Klemmabschnitt an der Bremsscheibe anliegt, so dass sowohl am Innenzylinder als auch am Außenzylinder des topfförmigen Klemmelements eine radiale Klemmung der Spindel erfolgt.

Gemäß einer zweiten Ausgestaltung der erfindungsgemäßen Klemmvorrichtung ist das Klemmelement so ausgebildet, dass in der zweiten Position des Klemmelements, in der die Spindel durch das Klemmelement geklemmt ist, der Innenzylinder mit seinem Klemmabschnitt an der Spindel und ein in der Nähe des Außenzylinders angeordneter Klemmabschnitt der Membran am Gehäuse anliegt. Bei dieser Ausgestaltung der Klemmvorrichtung ist somit zwischen dem Klemmabschnitt des Innenzylinders und der Spindel eine radial wirkende Klemmung und zwischen dem dem Außenzylinder zugeordneten und in der Nähe des Außenzylinders angeordneten Klemmabschnitt der Membran und dem Gehäuse eine axial wirkende Klemmung realisiert. Bevorzugt liegt auch bei dieser Ausgestaltung des Klemmelements der zweite, äußere Klemmabschnitt der Membran nicht am Gehäuse sondern an einer mit der Spindel fest verbundenen Bremsscheibe an, wobei auch hier vorzugsweise sowohl eine Klemmung der Spindel über die Bremsscheibe als auch direkt über den Innenzylinder des Klemmelements erfolgt.

Die bei dieser Ausgestaltung axial wirkende Klemmung zwischen dem Klemmabschnitt der Membran und dem Abschnitt der Bremsscheibe kann dadurch realisiert werden, dass das Klemmelement so ausgebildet ist, dass der Außenzylinder von seinem Befestigungsbereich zur Membran hin in Richtung auf den Innenzylinder geneigt ist. Ein derart, nach innen geneigter Abschnitt des Außenzylinders führt dazu, dass bei einer Verringerung der Krümmung der Membran durch Beaufschlagung mit einer Kraft der in der Nähe des Außenzylinders angeordnete Klemmabschnitt der Membran in die selbe Richtung wie die auf die Membran wirkenden Kraft verformt wird. Dadurch kommt der Klemmabschnitt der Membran an einen entsprechend angeordneten Bereich der Bremsscheibe zur Anlage.

Wie zuvor ausgeführt worden ist, weist die Klemmvorrichtung vorzugsweise eine mit der Spindel fest verbundene, insbesondere verschraubte Bremsscheibe auf, die in der zweiten Position des Klemmelements mit dem Klemmabschnitt des Außenzylinders oder dem Klemmabschnitt der Membran eine reibschlüssige Klemmung bildet. Die Bremsscheibe ist dabei vorzugsweise so angeordnet und ausgebildet, dass der Abschnitt der Bremsscheibe in der zweiten Position des Klemmelements mit seiner dem Klemmabschnitt des Außenzylinders bzw. dem Klemmabschnitt der Membran abgewandten Seite am Gehäuse anliegt. Hierdurch kann die Klemmwirkung der Bremsscheibe auf einfache Art und Weise verstärkt werden.

Wie eingangs bereits ausgeführt worden ist, betrifft die vorliegende Erfindung nicht nur eine Klemmvorrichtung sondern auch ein elastisches Klemmelement zur Verwendung bei einer, ein Gehäuse und eine im Gehäuse drehbar gelagerte Spindel aufweisenden, Klemmvorrichtung, wie sie in Anspruch 12 definiert ist. Bezüglich der Vorteile eines derartigen elastischen Klemmelements wird auf die vorherigen Ausführungen im Zusammenhang mit der erfindungsgemäßen Klemmvorrichtung verwiesen.

Die Membran des Klemmelements kann - aus Richtung des Kraftelements bzw. der Befestigungsbereiche gesehen - plan, konvex oder konkav ausgebildet sein. Vorzugsweise ist die Membran von ihrem Außenbereich und von ihrem Innenbereich zur Mitte hin nach innen geneigt, wobei der Membranneigungswinkel insbesondere zwischen 90° und 110° beträgt, so dass die Membran näherungsweise konkav ausgebildet ist. Bei einem derartigen Klemmelement weist die Membran vorzugsweise eine Dicke von 0,6 bis 2,5 mm auf. Eine derartige Dicke der Membran ermöglicht auch bei einem relativ niedrigeren Betriebsdruck bei einem pneumatisch beaufschlagten Kolben als Kraftelement eine ausreichende Verringerung der Krümmung der Membran, damit eine entsprechend hohe Klemmkraft auf die Spindel bzw. ein entsprechend hohes Haltemoment erzielt werden kann. Gleichzeitig gewährleistet eine solche Dicke der Membran jedoch auch eine ausreichende Steifigkeit des Klemmelements.

Die zur ausreichenden Veränderung der Krümmung der Membran erforderliche Kraft bzw. der erforderliche Betriebsdruck kann dadurch verringert oder die zulässige Dicke der Membran erhöht werden, dass in der Membran mehrere radiale verlaufende Schlitze ausgebildet sind. Durch die Ausbildung der radial verlaufenden Schlitze wird die tangentiale Verformbarkeit der Membran erhöht, wodurch eine Erhöhung der resultierenden Klemmkraft möglich ist.

Im Einzelnen gibt es nun eine Vielzahl von Möglichkeiten, die erfindungsgemäße Klemmvorrichtung bzw. das erfindungsgemäße elastische Klemmelement auszugestalten und weiterzubilden. Dazu wird verwiesen sowohl auf die den Patentansprüchen 1 und 12 nachgeordneten Patentansprüche als auch auf die Beschreibung bevorzugter Ausführungsbeispiele in Verbindung mit der Zeichnung. In der Zeichnung zeigen
- Fig. 1: ein erstes Ausführungsbeispiel einer Klemmvorrichtung als Teil eines Teilgeräts, im Schnitt,
- Fig. 2: eine vergrößerte Darstellung eines Teils des Klemmelements der Klemmvorrichtung gemäß Fig. 1, im Querschnitt,
- Fig. 3: eine vergrößerte Darstellung eines Teils einer alternativen Aus- führungsform eines Klemmelements, im Querschnitt,
- Fig. 4: ein zweites Ausführungsbeispiel einer Klemmvorrichtung als Teil eines Teilgeräts, im Schnitt,
- Fig. 5: eine vergrößerte Darstellung eines Teils des Klemmelements der Klemmvorrichtung gemäß Fig. 4, im Querschnitt,
- Fig. 6: einen Ausschnitt eines weiteren Ausführungsbeispiels einer Klemmvorrichtung, und
- Fig. 7: eine perspektivische Darstellung eines Teils eines erfindungsge- mäßen Klemmelements.

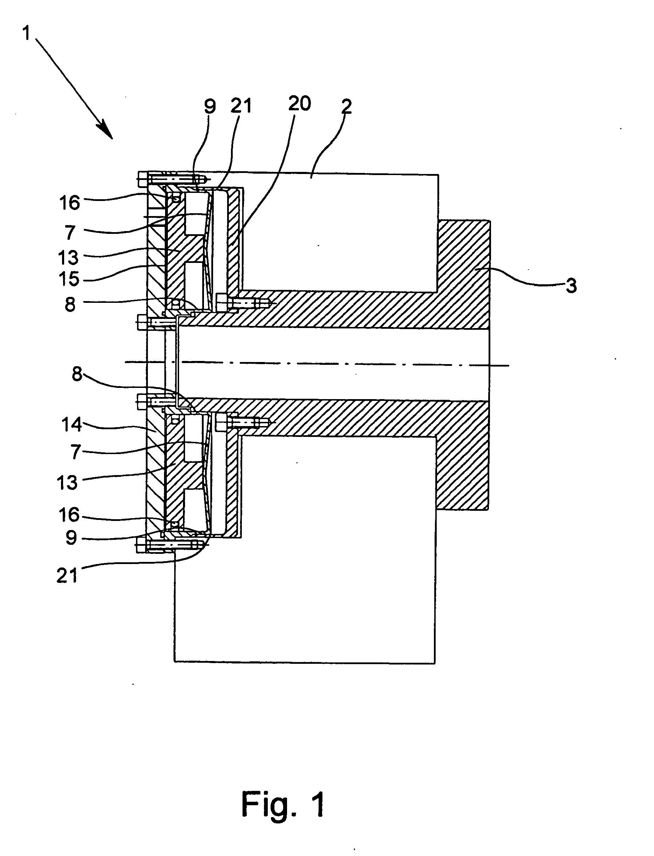

Die Fig. 1 zeigt ein erstes Ausführungsbeispiel einer Klemmvorrichtung als Teil eines Teilgeräts 1, wobei zu der Klemmvorrichtung ein Gehäuse 2, eine drehbar im Gehäuse 2 gelagerte Spindel 3 und ein elastisches Klemmelement 4 gehören. Das funktional zur Klemmvorrichtung gehörende Gehäuse 2 stellt gleichzeitig das Gehäuse 2 des Teilgeräts dar, wobei das Gehäuse 2 selber auch aus mehreren Gehäuseteilen bestehen kann, die miteinander verbunden, insbesondere verschraubt oder verschweißt sind.

Das in Fig. 1 dargestellte Teilgerät 1 dient dazu, ein einmal aufgespanntes Werkstück in einer beliebigen Winkelstellung der Spindel 3 zu positionieren, so dass das Werkstück anschließend in der gewünschten Position mittels einer Bearbeitungsmaschine, beispielsweise einer Fräs-, Bohr- oder Schleifmaschine bearbeitet werden kann. Zur Positionierung des Werkstücks weist das Teilgerät 1 eine Antriebsvorrichtung auf, wobei es sich bei dem dargestellten Ausführungsbeispiel um ein Schneckenradgetriebe handelt. Zur Befestigung eines zu bearbeitenden Werkstückes kann an einer Stirnseite der Spindel 3 eine Planscheibe befestigt sei.

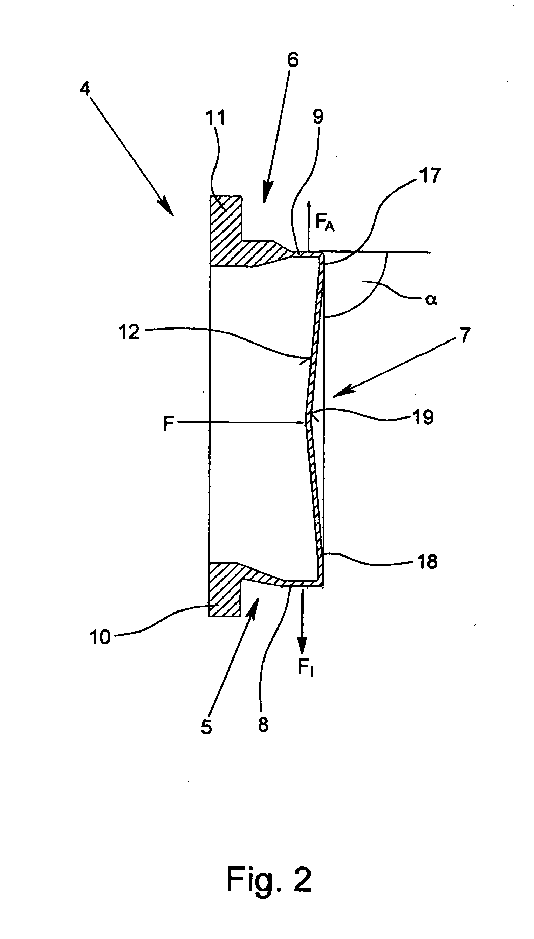

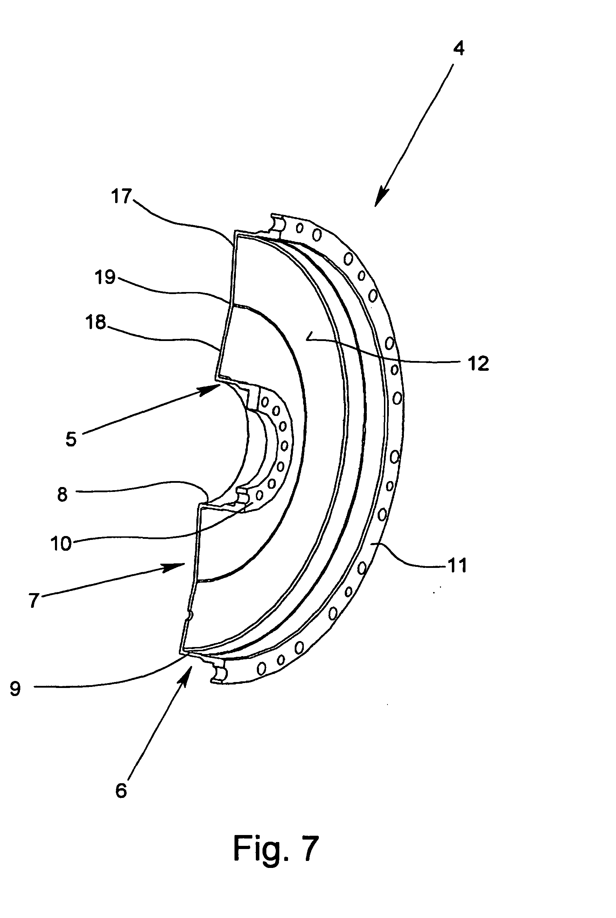

Wie aus den Fig. 1 und 2 ersichtlich ist, weist das erfindungsgemäße Klemmelement 4 einen die zu klemmende Spindel 3 umgebenden Innenzylinder 5, einen koaxial zum Innenzylinder 5 angeordneten Außenzylinder 6 und eine den Innenzylinder 5 und den Außenzylinder 6 verbindende Membran 7 auf. Die Membran 7 ist dabei im Wesentlichen senkrecht zum Innenzylinder 5 und zum Außenzylinder 6 angeordnet. Das perspektivisch in Fig. 7 dargestellte Klemmelement 4 ist somit näherungsweise topfförmig ausgebildet, wobei in der Mitte des "topfförmigen" Klemmelements 4 durch den Innenzylinder 5 eine Öffnung gebildet ist, die die zu klemmende Spindel 3 umgibt. Das vorzugsweise aus einem hochfesten Federstahl bestehende Klemmelement 4 kann als gedrehtes Bauteil hergestellt werden. Alternativ dazu können der Innenzylinder 5, der Außenzylinder 6 und die Membran 7 auch als drei einzelne Teile gefertigt sein, die dann zur Bildung des Klemmelements 4 miteinander verbunden werden.

Bei der in Fig. 1 dargestellten Klemmvorrichtung erfolgt die Klemmung der Spindel 3 dadurch, dass auf die Membran 7 eine Kraft F aufgebracht wird, wodurch sich die Krümmung der Membran 7 verringert, was wiederum dazu führt, dass ein Klemmabschnitt 8 des Innenzylinders 5 nach innen, in Richtung der Spindel 3 bzw. in Richtung des in Fig. 2 mit F_{I} dargestellten Pfeils verformt wird. Zwischen der Spindel 3 und dem Klemmabschnitt 8 des Innenzylinders 5 erfolgt somit eine radial wirkende Klemmung, wenn eine Kraft F auf die Membran 7 aufgebracht wird. Ebenso weist der Außenzylinder 6 einen Klemmabschnitt 9 auf, der bei Beaufschlagung der Membran 7 mit einer Kraft F in Richtung des in Fig. 2 mit F_{A} dargestellten Pfeils verformt wird.

Bei der Klemmvorrichtung kann zwischen der Spindel 3 und dem Innenzylinder 5 des Klemmelements 4 ein Ring aus einem gehärteten Stahl angeordnet sein, um eine Beschädigung der Spindel 3 beim Klemmvorgang aufgrund der auftretenden hohen Klemmkräfte zu verhindern. Alternativ dazu kann die Spindel 3 auch in dem den Innenzylinder 5 gegenüberliegenden Bereich entsprechend gehärtet sein.

Wie darüber hinaus den Figuren entnommen werden kann, weisen der Innenzylinder 5 und der Außenzylinder 6 des Klemmelements 4 jeweils an ihrem der Membran 7 abgewandten freien Ende einen als Flansch ausgebildeten Befestigungsbereich 10, 11 auf, wobei bei den dargestellten Ausführungsbeispielen das Klemmelement 4 über den Befestigungsbereich 11 des Außenzylinders 6 fest mit dem Gehäuse 2 verschraubt ist.

Die Anordnung und Ausgestaltung der Klemmvorrichtung ist dadurch weiter vereinfacht, dass die Kraft F auf die dem Befestigungsbereich 10, 11 des Innenzylinders 5 bzw. des Außenzylinders 6 zugewandten Innenseite 12 der Membran 7 wirkt. Die Kraft F wird dabei durch einen hydraulisch oder vorzugsweise pneumatisch beaufschlagbaren Kolben 13 übertragen, wobei der Kolben 13 auf den mittleren Bereich der Membran 7 einwirkt. Alternativ dazu kann die Membran 7 auch direkt mit Druckluft oder Drucköl beaufschlagt werden.

Bei dem in den Figuren dargestellten Kolben 13 kann es sich sowohl um einen einfachen Kolben als auch um einen Tandemkolben handeln. Auf der der Membran 7 abgewandten Seite des Kolbens 13 ist ein Deckel 14 mit den Befestigungsbereichen 10, 11 des Klemmelements 4 verbunden, so dass zwischen dem Deckel 14 und dem Kolben 13 ein Druckraum 15 ausgebildet ist. Dadurch, dass die Membran 7 auf ihrer Innenseite 12 über den Kolben 13 mit der Kraft F beaufschlagt wird, und durch die topfförmige Ausgestaltung des Klemmelements 4 muss der Druckraum 15 nicht gegenüber der drehenden Spindel 3 abgedichtet werden. Somit können zur Abdichtung des Druckraums 15 einfache Dichtungselemente 16 eingesetzt werden.

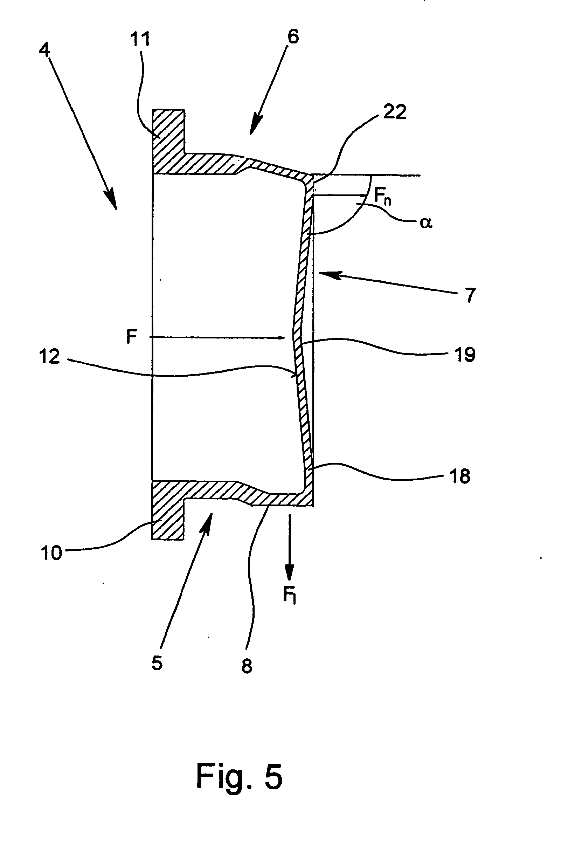

Bei den in den Figuren 2 und 5 dargestellten Ausführungsbeispielen des Klemmelements 4 ist die Membran 7 von ihrem Außenbereich 17 und von ihrem Innenbereich 18 zur Mitte 19 hin nach innen geneigt, so dass die Membran 7 im Bezug zum Kolben 13 näherungsweise konkav ausgebildet ist. Der Neigungswinkel α der Membran 7 beträgt dabei vorzugsweise zwischen 90° und 110°, insbesondere zwischen 95° und 105°.

Grundsätzlich kann das Klemmelement 4 so ausgebildet und innerhalb des Gehäuses 2 angeordnet sein, dass in der zweiten Position, in der die Spindel 3 durch das Klemmelement 4 geklemmt ist, nur der Innenzylinder 5 mit seinem Klemmabschnitt 8 an der Spindel 3 anliegt. Bei dem Ausführungsbeispiel gemäß den Fig. 1 und 2 weist jedoch auch der Außenzylinder 6 einen Klemmabschnitt 9 auf, der bei Beaufschlagung der Membran 7 mit einer Kraft F radial nach außen in Richtung des in Fig. 2 mit F_{A} bezeichneten Pfeils gedrückt wird. In der zweiten Position des Klemmelements 4 erfolgt dann nicht nur eine radial wirkende Klemmung zwischen dem Innenzylinder 5 und der Spindel 3 sondern zusätzlich auch eine radial wirkende Klemmung zwischen dem Außenzylinder 6 und einer mit der Spindel 3 fest verschraubten Bremsscheibe 20. Die Bremsscheibe 20 ist dabei derart ausgebildet, dass sie einen im Wesentlichen parallel zum Außenzylinder 6 verlaufenden Abschnitt 21 aufweist, an dem der Klemmabschnitt 9 des Außenzylinders 6 in der zweiten Position des Klemmelements 4 reibschlüssig anliegt.

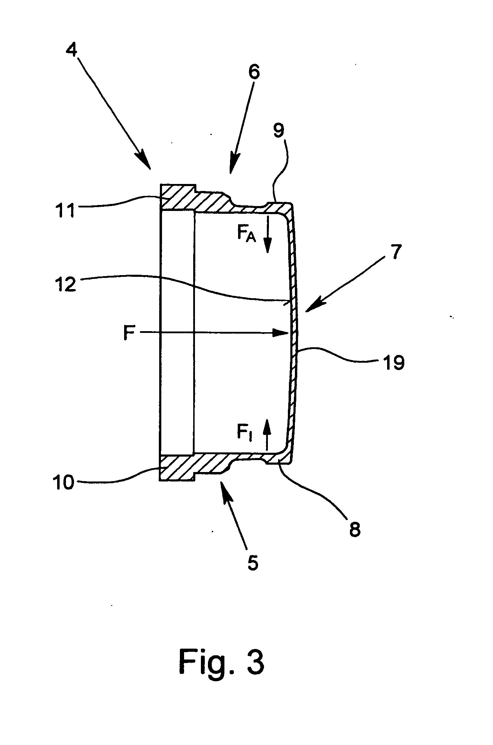

Im Unterschied zu dem Ausführungsbeispiel der Klemmvorrichtung bzw. des Klemmelements 4 gemäß den Fig. 1 und 2 ist bei dem Klemmelement 4 gemäß Fig. 3 die Membran 7 nach außen gewölbt, so dass die Membran 7 - aus Richtung des Kraftelements betrachtet - im Wesentlichen konvex ausgebildet ist. Wird bei dieser Ausgestaltung die Membran 7 mit einer Kraft F beaufschlagt, so führt dies zu einer Vergrößerung der bereits im unbeaufschlagten Zustand ausgebildeten Krümmung der Membran 7. Die Vergrößerung der Krümmung der Membran 7 führt dabei dazu, dass sowohl der Klemmabschnitt 8 des Innenzylinders 5 als auch der Klemmabschnitt 9 des Außenzylinders 6 nach innen gezogen werden.

Wie in Fig. 3 durch die Pfeile F_{I} und F_{A} dargestellt ist, wird bei einer Beaufschlagung der Membran 7 mit einer Kraft F der Klemmbereich 8 des Innenzylinders 5 von der Spindel 3 abgehoben. Gleichzeitig wird auch der Klemmabschnitt 9 des Außenzylinders 6 von dem korrespondierenden Abschnitt 21 der Bremsscheibe 20 abgehoben, so dass durch Beaufschlagung der Membran 7 mit einer Kraft F die Klemmung der Spindel 3 gelöst werden kann. In Fig. 3 ist somit eine Ausgestaltung eines Klemmelements 4 bzw. einer Klemmvorrichtung dargestellt, bei der im drucklosen Zustand die Spindel 3 geklemmt ist, während zum Lösen der Klemmung die Membran 7 mit einer Kraft F beaufschlagt werden muss. Im Unterschied dazu ist bei dem Ausführungsbeispiel gemäß den Fig. 1 und 2 die Klemmung im drucklosen Zustand nicht aktiv, d. h. zur Klemmung der Spindel 3 muss der Kolben 13 mit Druck beaufschlagt werden.

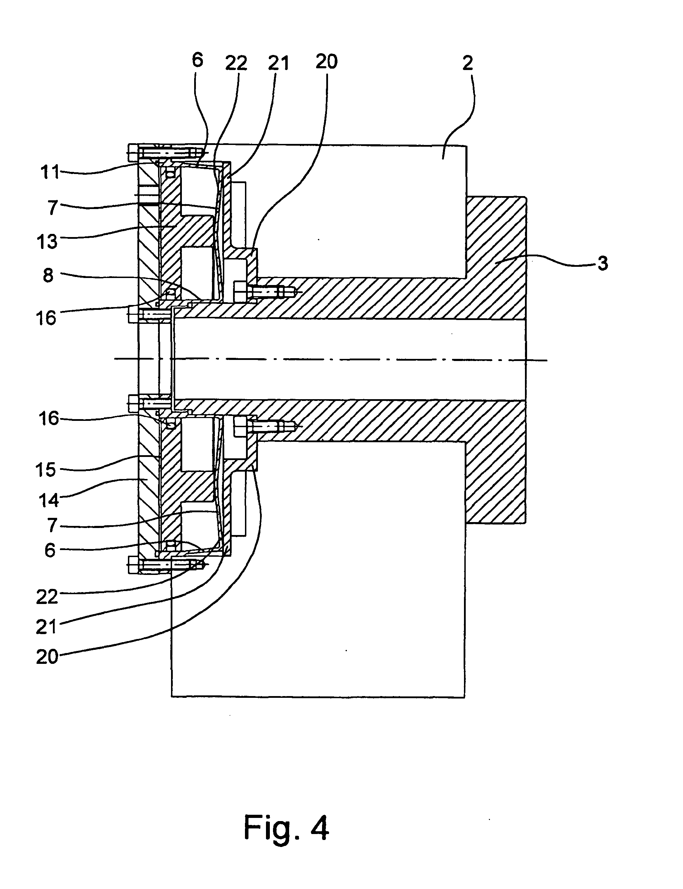

Bei dem Ausführungsbeispiel der Klemmeinrichtung bzw. des Klemmelements 4 gemäß den Fig. 4 und 5 ist die Membran 7 - ebenso wie bei dem Ausführungsbeispiel gemäß den Fig. 1 und 2 - von ihrem Außenbereich 17 und von ihrem Innenbereich 18 zur Mitte 19 hin nach innen geneigt, so dass die Membran 7 bezogen auf den Kolben 13 im Wesentlichen konkav ausgebildet ist. Außerdem wirkt auch bei diesem Ausführungsbeispiel der Kolben 13 bei Druckbeaufschlagung auf die Innenseite 12 der Membran 7.

Das Klemmelement 4 gemäß Fig. 5 unterscheidet sich jedoch dadurch von dem Klemmelement 4 gemäß Fig. 2, das bei der in Fig. 5 dargestellten Ausführungsform der Außenzylinder 6 von seinem Befestigungsbereich 11 zur Membran 7 hin in Richtung auf den Innenzylinder 5 geneigt ist. Dies führt dazu, dass bei einer Beaufschlagung der Membran 7 mit einer Kraft F durch die Verringerung der Krümmung der Membran 7 eine axiale Verformung des in der Nähe des Außenzylinders 6 angeordneten Klemmabschnitts 22 der Membran 7 in Richtung des in Fig. 5 mit F_{M} gekennzeichneten Pfeils erfolgt. Wird eine derart ausgebildete Membran 7 mit einer Kraft F beaufschlagt, so kommt es neben der radial wirkenden Klemmung zwischen dem Klemmabschnitt 8 des Innenzylinders 5 und der Spindel 3 zusätzlich zu einer axial wirkenden Klemmung zwischen dem Klemmabschnitt 22 der Membran 7 und einem entsprechenden Abschnitt 21 der mit der Spindel 3 fest verbundenen Bremsscheibe 20.

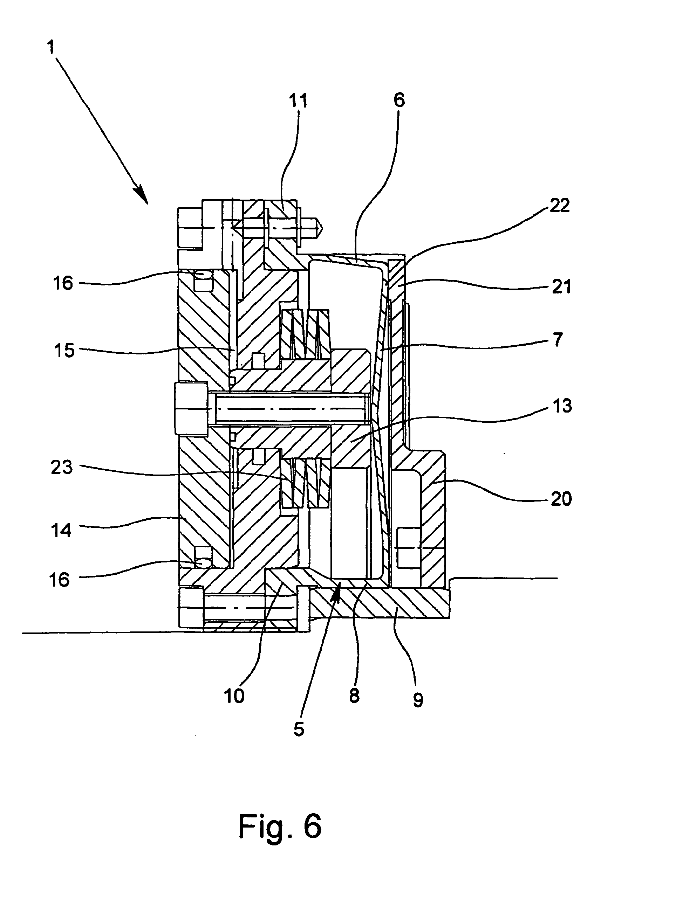

In Fig. 6 ist eine weitere Ausführungsform einer Klemmvorrichtung dargestellt, wobei auch bei dieser Klemmvorrichtung - entsprechend der Ausführungsform gemäß Fig. 3 - eine Klemmung der Spindel 3 in drucklosem Zustand vorliegt, während zur Lösung der Klemmung der Kolben 13 mit Druck beaufschlagt werden muss. Das in Fig. 6 dargestellte Klemmelement 4 entspricht dabei von seiner Form im Wesentlichen dem in Fig. 5 dargestellten Klemmelement 4. Im Unterschied zur Ausgestaltung gemäß Fig. 4 weist die in Fig. 6 dargestellte Klemmvorrichtung neben dem mit Druck beaufschlagbaren Kolben 13 als erstem Kraftelement ein zusätzliches Federelement 23 in Form zweier Tellerfedern als zweites Kraftelement auf. Der Kolben 13 wird dabei durch das Federelement 23 gegen die Membran 7 gedrückt, wenn das erste Kraftelement nicht aktiviert ist, d. h. wenn der Druckraum 15 nicht mit einem Überdruck beaufschlagt ist. Bei einer Druckbeaufschlagung des Druckraums 15 wird der Kolben 13 entgegen der Federkraft der Federelemente 23 von der Membran 7 weggezogen, so dass die Membran 7 in ihre ursprüngliche Form zurückfedert.

In Fig. 6 ist das Klemmelement 4 in seiner zweiten Position dargestellt, in der sowohl der Klemmabschnitt 8 des Innenzylinders 5 an der Spindel 3 als auch der Klemmabschnitt 22 der Membran 7 am Abschnitt 21 der Bremsscheibe 20 anliegt. Wird der Druckraum 15 mit Überdruck beaufschlagt, so dass der Kolben 13 das Federelement 23 etwas zusammendrückt, so führt dies zu einer leichten Vergrößerung der Krümmung der Membran 7, was wiederum dazu führt, dass sowohl der Klemmabschnitt 8 des Innenzylinders 5 von der Spindel 3 als auch der Klemmabschnitt 9 des Außenzylinders 6 von der Bremsscheibe 20 geringfügig abgehoben wird. In diesem Zusammenhang sei darauf hingewiesen, dass sowohl die radiale Verformung des Innenzylinders 5 und gegebenenfalls des Außenzylinders 6 als auch die axiale Verformung der Membran 7 relativ gering ist, wobei bereits ein geringer Verformungsweg, beispielsweise von wenigen hundertstel Millimetern ausreichen kann, um eine entsprechende hohe Klemmkraft bzw. ein hohes Haltemoment zu erreichen.

## Patentansprüche

1. Klemmvorrichtung mit einem Gehäuse (2), mit einer im Gehäuse (2) drehbar gelagerten Spindel (3) und mit einem elastischen Klemmelement (4) wobei das Klemmelement (4) durch Beaufschlagung mit einer Kraft aus einer ersten Position, in der die Spindel (3) drehbar ist, in eine zweite Position, in der die Spindel (3) durch das Klemmelement (4) geklemmt ist, verbringbar ist,
wobei das Klemmelement (4) einen die zu klemmende Spindel (3) umgebenden Innenzylinder (5), einen koaxial zum Innenzylinder (5) angeordneten Außenzylinder (6) und eine den Innenzylinder (5) und den Außenzylinder (6) verbindende Membran (7) aufweist,
**dadurch gekennzeichnet,**
**dass** das Klemmelement (4) näherungsweise topfförmig ausgebildet ist, wobei in der
Mitte des Klemmelements (4) durch den Innenzylinder (5) eine Öffnung gebildet ist, die die zu klemmende Spindel (3) umgibt, und
**dass** das Klemmelement (4) derart angeordnet und ausgebildet ist, dass durch Beaufschlagung des Klemmelements (4) mit einer Kraft die Krümmung der Membran (7) veränderbar ist,
wobei eine Veränderung der Krümmung der Membran (7) eine Veränderung des Abstandes eines Klemmabschnitts (8) des Innenzylinders (5) und/oder eines Klemmabschnitts (9) des Außenzylinders (6) oder des Abstandes eines Klemmabschnitts (8) des Innenzylinders (5) und eines in der Nähe des Auβenzylinders (6) angeordneten Klemmabschnitts (22) der Membran (7) zur Spindel (3) bewirkt,
so dass durch Beaufschlagung des Klemmelements (4) mit einer Kraft die Spindel (3) durch das Klemmelement (4) geklemmt oder eine Klemmung der Spindel (3) gelöst wird.

2. Klemmvorrichtung nach Anspruch 1, **dadurch gekennzeichnet, dass** der Innenzylinder (5) und der Außenzylinder (6) jeweils an ihrem der Membran (7) abgewandten freien Ende einen Befestigungsbereich (10, 11) aufweisen, wobei vorzugsweise der Befestigungsbereich (11) des Außenzylinders (6) mit dem Gehäuse (2) fest verbunden, insbesondere verschraubt ist.

3. Klemmvorrichtung nach Anspruch 2, **dadurch gekennzeichnet, dass** die Kraft auf die dem Befestigungsbereich (10, 11) des Innenzylinders (5) und des Außenzylinders (6) zugewandte Innenseite (12) der Membran (7) wirkt.

4. Klemmvorrichtung nach einem der Ansprüche 1 bis 3, **dadurch gekennzeichnet, dass** zur Beaufschlagung des Klemmelements (4) mit einer Kraft ein pneumatisch oder hydraulisch beaufschlagbarer Kolben (13) vorgesehen ist, wobei der Kolben (13) vorzugsweise auf den mittleren Bereich der Membran (7) einwirkt.

5. Klemmvorrichtung nach einem der Ansprüche 1 bis 4, **dadurch gekennzeichnet, dass** die Membran (7) von ihrem Außenbereich (17) und von ihrem Innenbereich (18) zur Mitte (19) hin nach innen geneigt ist, wobei der Membranneigungswinkel (α) vorzugsweise zwischen 90° und 110°, insbesondere zwischen 95° und 105° beträgt.

6. Klemmvorrichtung nach einem der Ansprüche 1 bis 5, **dadurch gekennzeichnet, dass** in der zweiten Position des Klemmelements (4), in der die Spindel (3) durch das Klemmelement (4) geklemmt ist, sowohl der Innenzylinder (5) mit seinem Klemmabschnitt (8) an der Spindel (3) als auch der Außenzylinder (6) mit einem Klemmabschnitt (9) am Gehäuse (2) anliegt.

7. Klemmvorrichtung nach einem der Ansprüche 1 bis 5, **dadurch gekennzeichnet, dass** die Spindel (3) mit einer Bremsscheibe (20) fest verbunden ist, und dass in der zweiten Position des Klemmelements (4), in der die Spindel (3) durch das Klemmelement (4) geklemmt ist, der Innenzylinder (5) mit seinem Klemmabschnitt (8) an der Spindel (3) und der Außenzylinder (6) mit einem Klemmabschnitt (9) an einem Abschnitt (21) der Bremsscheide (20) anliegt.

8. Klemmvorrichtung nach einem der Ansprüche 1 bis 5, **dadurch gekennzeichnet, dass** in der zweiten Position des Klemmelements (4), in der die Spindel (3) durch das Klemmelement (4) geklemmt ist, der Innenzylinder (5) mit seinem Klemmabschnitt (8) an der Spindel (3) und ein in der Nähe des Außenzylinders (6) angeordneter Klemmabschnitt (22) der Membran (7) am Gehäuse (2) anliegt.

9. Klemmvorrichtung nach einem der Ansprüche 1 bis 5, **dadurch gekennzeichnet, dass** die Spindel (3) mit einer Bremsscheibe (20) fest verbunden ist, und in der zweiten Position des Klemmelements (4), in der die Spindel (3) durch das Klemmelement (4) geklemmt ist, der Innenzylinder (5) mit seinem Klemmabschnitt (8) an der Spindel (3) und ein in der Nähe des Außenzylinders (6) angeordneter Klemmabschnitt (22) der Membran (7) an einem Abschnitt (21) der Bremsscheibe (20) anliegt.

10. Klemmvorrichtung nach Anspruch 7 oder 9, **dadurch gekennzeichnet, dass** der Abschnitt (21) der Bremsscheibe (20) in der zweiten Position des Klemmelements (4) mit seiner dem Klemmabschnitt (9) des Außenzylinders (6) bzw. dem Klemmabschnitt (22) der Membran (7) abgewandten Seite am Gehäuse (2) anliegt.

11. Klemmvorrichtung nach einem der Ansprüche 5 bis 11, **dadurch gekennzeichnet, dass** die Membran (7) mit einer zweiten Kraft beaufschlagt ist, die der ersten Kraft entgegenwirkt, so dass die Spindel (3) durch das Klemmelement (4) geklemmt ist, wenn die Membran (7) nicht mit der ersten Kraft beaufschlagt ist, während bei Beaufschlagung der Membran (7) mit der ersten Kraft, die Klemmung der Spindel (4) gelöst ist.

12. Elastisches Klemmelement zur Verwendung bei einer, ein Gehäuse (2) und eine im Gehäuse (2) drehbar gelagerte Spindel (3) aufweisenden Klemmvorrichtung nach einem der Ansprüche 1 bis 11, wobei durch Beaufschlagung des Klemmelements (4) mit einer Kraft dieses aus einer ersten Position in eine zweite Position verbringbar ist, wobei die Spindel (3) in der ersten Position des Klemmelements (4) drehbar ist und in der zweite Position des Klemmelements (4) durch das Klemmelement (4) geklemmt ist,
**dadurch gekennzeichnet,**
**dass** das Klemmelement (4) näherungsweise topfförmig ausgebildet ist und wobei das Klemmelement einen die zu klemmende Spindel (3) umgebenden Innenzylinder (5), einen koaxial zum Innenzylinder (5) angeordneten Außenzylinder (6) und eine den Innenzylinder (5) und den Außenzylinder (6) verbindende Membran (7) aufweist,
**dass** der Innenzylinder (5) und der Außenzylinder (6) jeweils an ihrem der Membran (7) abgewandten freien Ende einen Befestigungsbereich (10, 11) aufweisen, der mit dem Gehäuse (2) fest verbindbar ist, und
**dass** das Klemmelement (4) derart ausgebildet ist, dass durch Beaufschlagung des Klemmelements (4) mit einer Kraft die Krümmung der Membran (7) veränderbar ist, wobei eine Veränderung der Krümmung der Membran (7) eine Veränderung des Abstandes eines Klemmabschnitts (8) des Innenzylinders (5) und/oder eine Klemmabschnitts (9) des Außenzylinders (6) oder des Abstandes eines Klemmabschnitts (8) des Innenzylinder (5) und eines in der Nähe des Außenzylinders (6) angeordneten Klemmabschnitts (22) der Membran (7) zur Spindel (3) bewirkt, so dass im montierten Zustand des Klemmelements (4) durch Beaufschlagung des Klemmelements (4) mit einer Kraft die Spindel (3) durch das Klemmelement (4) geklemmt oder eine Klemmung der Spindel (3) gelöst wird.

13. Elastisches Klemmelement nach Anspruch 12, **dadurch gekennzeichnet, dass** die Membran (7) von ihrem Außenbereich (17) und von ihrem Innenbereich (18) zur Mitte (19) hin nach innen geneigt ist, wobei der Membranneigungswinkel (α) vorzugswcisc zwischen 90° und 110°, insbesondere zwischen 95° und 105° beträgt.

14. Elastisches Klemmelement nach Anspruch 12 oder 13, **dadurch gekennzeichnet, dass** der Außenzylinder (6) von seinem Befestigungsbereich (11) zur Membran (7) hin in Richtung auf den Innenzylinder (5) geneigt ist.

15. Elastisches Klemmelement nach einem der Ansprüche 12 bis 14, **dadurch gekennzeichnet, dass** in der Membran (7) radial verlaufende Schlitze ausgebildet sind.

## Claims

1. Clamping device with a housing (2), with a spindle (3) rotatably mounted in the housing (2), and with an elastic clamping element (4), wherein the clamping element (4) can be moved by application of a force from a first position, in which the spindle (3) can be rotated, into a second position, in which the spindle (3) is clamped by the clamping element (4), wherein the clamping element (4) has an inner cylinder (5) surrounding the spindle (3) to be clamped, an outer cylinder (6) arranged coaxially to the inner cylinder (5), and a membrane (7) connecting the inner cylinder (5) and the outer cylinder (6),
**characterized in**
**that** the clamping element (4) has an approximately cup-shaped design, wherein an opening which surrounds the spindle (3) to be clamped is formed by the inner cylinder (5) in the centre of the clamping element (4), and
**that** the clamping element (4) is arranged and designed in such a way that, by applying a force to the clamping element (4), the curvature of the membrane (7) can be changed,
wherein a change in the curvature of the membrane (7) causes a change in the distance of a clamping portion (8) of the inner cylinder (5) and/or of a clamping portion (9) of the outer cylinder (6) or of the distance of a clamping portion (8) of the inner cylinder (5) and of a clamping portion (22), arranged in the vicinity of the outer cylinder (6), of the membrane (7) from the spindle (3), with the result that, by applying a force to the clamping element (4), the spindle (3) is clamped by the clamping element (4) or a clamping of the spindle (3) is released.

2. Clamping device according to Claim 1, **characterized in that** the inner cylinder (5) and the outer cylinder (6) each have a fastening region (10, 11) at their free end facing away from the membrane (7), wherein the fastening region (11) of the outer cylinder (6) is preferably fixedly connected, in particular screwed, to the housing (2).

3. Clamping device according to Claim 2, **characterized in that** the force acts on the inner side (12) of the membrane (7) facing the fastening region (10, 11) of the inner cylinder (5) and of the outer cylinder (6).

4. Clamping device according to one of Claims 1 to 3, **characterized in that**, in order to apply a force to the clamping element (4), a piston (13) which can be acted on pneumatically or hydraulically is provided, wherein the piston (13) preferably acts on the central region of the membrane (7).

5. Clamping device according to one of Claims 1 to 4, **characterized in that** the membrane (7) is inclined inwardly towards the centre (19) from its outer region (17) and from its inner region (18), wherein the membrane inclination angle (α) is preferably between 90° and 110°, in particular between 95° and 105°.

6. Clamping device according to one of Claims 1 to 5, **characterized in that**, in the second position of the clamping element (4), in which the spindle (3) is clamped by the clamping element (4), both the inner cylinder (5) bears with its clamping portion (8) against the spindle (3) and the outer cylinder (6) bears with a clamping portion (9) against the housing (2).

7. Clamping device according to one of Claims 1 to 5, **characterized in that** the spindle (3) is fixedly connected to a brake disc (20), and **in that**, in the second position of the clamping element (4) in which the spindle (3) is clamped by the clamping element (4), the inner cylinder (5) bears with its clamping portion (8) against the spindle (3) and the outer cylinder (6) bears with a clamping portion (9) against a portion (21) of the brake disc (20).

8. Clamping device according to one of Claims 1 to 5, **characterized in that**, in the second position of the clamping element (4), in which the spindle (3) is clamped by the clamping element (4), the inner cylinder (5) bears with its clamping portion (8) against the spindle (3) and a clamping portion (22), arranged in the vicinity of the outer cylinder (6) of the membrane (7) bears against the housing (2).

9. Clamping device according to one of Claims 1 to 5, **characterized in that** the spindle (3) is fixedly connected to a brake disc (20), and, in the second position of the clamping element (4), in which the spindle (3) is clamped by the clamping element (4), the inner cylinder (5) bears with its clamping portion (8) against the spindle (3) and a clamping portion (22), arranged in the vicinity of the outer cylinder (6), of the membrane (7) bears against a portion (21) of the brake disc (20).

10. Clamping device according to Claim 7 or 9, **characterized in that**, in the second position of the clamping element (4), the portion (21) of the brake disc (20) bears against the housing (2) with its side facing away from the clamping portion (9) of the outer cylinder (6) or away from the clamping portion (22) of the membrane (7).

11. Clamping device according to one of Claims 5 to 11, **characterized in that** the membrane (7) is subjected to a second force which counteracts the first force, with the result that the spindle (3) is clamped by the clamping element (4) when the membrane (7) is not subjected to the first force, whereas the clamping of the spindle (3) is released when the membrane (7) is subjected to the first force.

12. Elastic clamping element for use in a clamping device according to one of Claims 1 to 11 which has a housing (2) and a spindle (3) rotatably mounted in the housing (2), wherein the clamping element (4) can be moved by application of a force from a first position into a second position, wherein the spindle (3) can be rotated in the first position of the clamping element (4) and is clamped by the clamping element (4) in the second position of the clamping element (4),
wherein the clamping element has an inner cylinder (5) surrounding the spindle (3) to be clamped, an outer cylinder (6) arranged coaxially to the inner cylinder (5), and a membrane (7) connecting the inner cylinder (5) and the outer cylinder (6),
**characterized in**
**that** the clamping element (4) has an approximately cup-shaped design, and in that the inner cylinder (5) and the outer cylinder (6) each have at their free end facing away from the membrane (7) a fastening region (10, 11) which can be fixedly connected to the housing (2), and
**that** the clamping element (4) is designed in such a way that, by applying a force to the clamping element (4), the curvature of the membrane (7) can be changed, wherein a change in the curvature of the membrane (7) causes a change in the distance of a clamping portion (8) of the inner cylinder (5) and/or of a clamping portion (9) of the outer cylinder (6) or of the distance of a clamping portion (8) of the inner cylinder (5) and of a clamping portion (22), arranged in the vicinity of the outer cylinder (6), of the membrane (7) from the spindle (3), with the result that, in the mounted state of the clamping element (4), by applying a force to the clamping element (4), the spindle (3) is clamped by the clamping element (4) or a clamping of the spindle (3) is released.

13. Elastic clamping element according to Claim 12, **characterized in that** the membrane (7) is inclined inwardly towards the centre (19) from its outer region (17) or from its inner region (18), wherein the membrane inclination angle (α) is preferably between 90° and 110°, in particular between 95° and 105°.

14. Elastic clamping element according to Claim 12 or 13, **characterized in that** the outer cylinder (6) is inclined from its fastening region (11) towards the membrane (7) in the direction of the inner cylinder (5).

15. Elastic clamping element according to one of Claims 12 to 14, **characterized in that** radially extending slots are formed in the membrane (7).

## Revendications

1. Dispositif de serrage comprenant un boîtier (2) avec une broche (3) montée à rotation dans le boîtier (2) et un élément de serrage élastique (4), l'élément de serrage (4) pouvant être amené par sollicitation par une force depuis une première position dans laquelle la broche (3) peut être tournée dans une deuxième position, dans laquelle la broche (3) est serrée par l'élément de serrage (4),
l'élément de serrage (4) présentant un cylindre interne (5) entourant la broche (3) à serrer, un cylindre externe (6) disposé coaxialement par rapport au cylindre interne (5) et une membrane (7) reliant le cylindre interne (5) et le cylindre externe (6),
**caractérisé en ce que**
l'élément de serrage (4) est réalisé approximativement en forme de pot, une ouverture étant formée au centre de l'élément de serrage (4) à travers le cylindre interne (5), laquelle ouverture entoure la broche (3) à serrer, et l'élément de serrage (4) est disposé et réalisé de telle sorte que par sollicitation de l'élément de serrage (4) avec une force, la courbure de la membrane (7) puisse être modifiée,
une modification de la courbure de la membrane (7) provoquant une modification de la distance d'une portion de serrage (8) du cylindre interne (5) et/ou d'une portion de serrage (9) du cylindre externe (6) ou de la distance d'une portion de serrage (8) du cylindre interne (5) et d'une portion de serrage (22) de la membrane (7) disposée à proximité du cylindre externe (6) par rapport à la broche (3),
de telle sorte que par sollicitation de l'élément de serrage (4) avec une force, la broche (3) soit serrée par l'élément de serrage (4) ou qu'un serrage de la broche (3) soit libéré.

2. Dispositif de serrage selon la revendication 1, **caractérisé en ce que** le cylindre interne (5) et le cylindre externe (6) présentent chacun, au niveau de leur extrémité libre opposée à la membrane (7), une région de fixation (10, 11), de préférence la région de fixation (11) du cylindre externe (6) étant connectée fixement au boîtier (2), en particulier par vissage.

3. Dispositif de serrage selon la revendication 2, **caractérisé en ce que** la force agit sur le côté interne (12) de la membrane (7) tourné vers la région de fixation (10, 11) du cylindre interne (5) et du cylindre externe (6).

4. Dispositif de serrage selon l'une quelconque des revendications 1 à 3, **caractérisé en ce que** pour la sollicitation de l'élément de serrage (4) avec une force, on prévoit un piston (13) pouvant être sollicité pneumatiquement ou hydrauliquement, le piston (13) agissant de préférence sur la région centrale de la membrane (7).

5. Dispositif de serrage selon l'une quelconque des revendications 1 à 4, **caractérisé en ce que** la membrane (7) est inclinée vers l'intérieur depuis sa région externe (17) et depuis sa région interne (18) vers le centre (19), l'angle d'inclinaison de la membrane (α) étant de préférence compris entre 90° et 110°, notamment entre 95° et 105°.

6. Dispositif de serrage selon l'une quelconque des revendications 1 à 5, **caractérisé en ce que** dans la deuxième position de l'élément de serrage (4), dans laquelle la broche (3) est serrée par l'élément de serrage (4), le cylindre interne (5) s'applique avec sa portion de serrage (8) contre la broche (3) et le cylindre externe (6) s'applique avec une portion de serrage (9) contre le boîtier (2).

7. Dispositif de serrage selon l'une quelconque des revendications 1 à 5, **caractérisé en ce que** la broche (3) est connectée fixement à un disque de frein (20), et **en ce que** dans la deuxième position de l'élément de serrage (4), dans laquelle la broche (3) est serrée par l'élément de serrage (4), le cylindre interne (5) s'applique avec sa portion de serrage (8) contre la broche (3) et le cylindre externe (6) s'applique avec une portion de serrage (9) contre une portion (21) du disque de frein (20).

8. Dispositif de serrage selon l'une quelconque des revendications 1 à 5, **caractérisé en ce que** dans la deuxième position de l'élément de serrage (4), dans laquelle la broche (3) est serrée par l'élément de serrage (4), le cylindre interne (5) s'applique avec sa portion de serrage (8) contre la broche (3) et une portion de serrage (22) de la membrane (7) disposée à proximité du cylindre externe (6) s'applique contre le boîtier (2).

9. Dispositif de serrage selon l'une quelconque des revendications 1 à 5, **caractérisé en ce que** la broche (3) est connectée fixement à un disque de frein (20) et dans la deuxième position de l'élément de serrage (4), dans laquelle la broche (3) est serrée par l'élément de serrage (4), le cylindre interne (5) s'applique avec sa portion de serrage (8) contre la broche (3) et une portion de serrage (22) de la membrane (7) disposée à proximité du cylindre externe (6) s'applique contre une portion (21) du disque de frein (20).

10. Dispositif de serrage selon la revendication 7 ou 9, **caractérisé en ce que** la portion (21) du disque de frein (20) dans la deuxième position de l'élément de serrage (4) s'applique contre le boîtier (2) avec son côté opposé à la portion de serrage (9) du cylindre externe (6) ou à la portion de serrage (22) de la membrane (7).

11. Dispositif de serrage selon l'une quelconque des revendications 5 à 11, **caractérisé en ce que** la membrane (7) est sollicitée avec une deuxième force qui agit à l'encontre de la première force, de telle sorte que la broche (3) soit serrée par l'élément de serrage (4), lorsque la membrane (7) n'est pas sollicitée par la première force, tandis que lors de la sollicitation de la membrane (7) par la première force, le serrage de la broche (3) est desserré.

12. Élément de serrage élastique pour l'utilisation dans un dispositif de serrage présentant un boîtier (2) et une broche (3) montée à rotation dans le boîtier (2) selon l'une quelconque des revendications 1 à 11, dans lequel par sollicitation de l'élément de serrage (4) avec une force, celui-ci peut être amené d'une première position dans une deuxième position, la broche (3) pouvant tourner dans la première position de l'élément de serrage (4) et étant serrée par l'élément de serrage (4) dans la deuxième position de l'élément de serrage (4),
l'élément de serrage présentant un cylindre interne (5) entourant la broche à serrer (3), un cylindre externe (6) disposé coaxialement par rapport au cylindre interne (5) et une membrane (7) reliant le cylindre interne (5) et le cylindre externe (6),
**caractérisé en ce que**
l'élément de serrage (4) est réalisé approximativement en forme de pot et
le cylindre interne (5) et le cylindre externe (6) présentent à chaque fois, à leur extrémité libre opposée à la membrane (7), une région de fixation (10, 11) qui peut être connectée fixement au boîtier (2), et
l'élément de serrage (4) est réalisé de telle sorte que par sollicitation de l'élément de serrage (4) avec une force, la courbure de la membrane (7) puisse être modifiée, une modification de la courbure de la membrane (7) provoquant une modification de la distance d'une portion de serrage (8) du cylindre interne (5) et/ou d'une portion de serrage (9) du cylindre externe (6) ou de la distance d'une portion de serrage (8) du cylindre interne (5) et d'une portion de serrage (22) de la membrane (7) disposée à proximité du cylindre externe (6) par rapport à la broche (3), de telle sorte que dans l'état monté de l'élément de serrage (4), par sollicitation de l'élément de serrage (4) avec une force, la broche (3) soit serrée par l'élément de serrage (4) ou qu'un serrage de la broche (3) soit libéré.

13. Élément de serrage élastique selon la revendication 12, **caractérisé en ce que** la membrane (7) est inclinée vers l'intérieur depuis sa région externe (17) et depuis sa région interne (18) vers le centre (19), l'angle d'inclinaison de la membrane (α) étant de préférence compris entre 90° et 110°, notamment entre 95° et 105°.

14. Élément de serrage élastique selon la revendication 12 ou 13, **caractérisé en ce que** le cylindre externe (6) est incliné dans la direction du cylindre interne (5) depuis sa région de fixation (11) par rapport à la membrane (7).

15. Élément de serrage élastique selon l'une quelconque des revendications 12 à 14, **caractérisé en ce que** des fentes s'étendant radialement sont réalisées dans la membrane (7).
